# DEMANDE DE BREVET EUROPEEN

(11) **EP 1 847 450 A2**
(43) Date de publication de la demande: **24.10.2007**
(21) Numéro de dépôt: 07290494.9
(22) Date de dépôt: 20.04.2007
(51) Int. Cl.: B62J 1/28, B62B 15/00, B60N 2/24, B60N 2/30, B62K 5/04

(54) **Engin roulant équipé d'un siège repliable et siège équipant un tel engin**

(30) Priorité: 20.04.2006 FR 0603487
(71) Demandeur: Goutodier, Sylvain, 17137 Esnandes (FR)
(72) Inventeur: Goutodier, Sylvain, 17137 Esnandes (FR)
(74) Mandataire: Laget, Jean-Loup

(57) **Abrégé**

Engin roulant, de type char à voile, kart ou vélo, sur lequel le pilote est en position semi couchée, comprenant un châssis (1) roulant surmonté d'un siège comportant une assise (10) et un dossier (11), caractérisé en ce qu'au moins une partie du dossier (11) est animée d'un déplacement relatif par rapport à l'assise (10) du siège et est apte à passer d'une position active d'utilisation, dans laquelle assise (10) et dossier (11) forment un angle obtus, à une position inactive de rangement, dans laquelle le dossier (11) est rabattu au-dessus de l'assise (10), en vue de constituer un siège repliable.

## Description

La présente invention concerne le domaine des engins roulants non motorisés, de type char à voile ou vélo couché.

Engin roulant de sport et de loisir, le char à voile est généralement constitué d'un châssis roulant comprenant une poutre centrale disposée selon l'axe longitudinal portant à l'avant au moins une roue gouvernée par le pilote par l'intermédiaire d'un palonnier et à l'arrière les essieux reliés aux deux roues arrière. Cette poutre centrale comporte également un logement du pied du mât auquel est fixée la voile servant à la propulsion de l'engin. Le chariot est surmonté d'une coque oblongue sur laquelle s'installe le pilote en position couchée ou semi couchée afin de gouverner l'engin. Actuellement, cette coque, généralement moulée en un matériau rigide monobloc, et munie de bords périphériques, est de taille relativement importante car elle a pour fonction à la fois de soutenir l'ensemble du corps du pilote (hormis ses pieds qui actionnent le palonnier avant et sa tête, redressée) et de le retenir latéralement. Ladite coque doit en outre être fixée rigidement au chariot pour des raisons de sécurité, car le char à voile peut atteindre des vitesses élevées pouvant aller jusqu'à 100 km/h. Même si les roues, essieux, mât et voile peuvent généralement être démontés du châssis, les dimensions de la coque posent des problèmes pour le transport et le rangement de l'engin.

De même, à l'opposé des vélos traditionnels dont la selle est de taille réduite, les vélos appelés "vélos couchés", où le pilote est assis sur un siège très incliné, voire quasi horizontal, en position semi-couchée ou couchée, possèdent également un siège de grande dimension. L'encombrement du siège du vélo couché limite les possibilités de pliage de l'engin et présente donc aussi des inconvénients pour son transport et son rangement.

Un but de la présente invention est par conséquent de pallier les inconvénients précités en proposant un engin roulant muni d'un siège d'encombrement réduit lors du transport et du rangement de l'engin, fixé de manière rigide au cadre ou au chariot, de manière à garantir la sécurité du pilote en fonctionnement, sans nuire à son confort.

Un autre but de l'invention est de prévoir un engin roulant comportant un siège ne nécessitant pas, pour son rangement ou sa mise en fonctionnement, l'utilisation d'outils, ni la mise en oeuvre de petites pièces intermédiaires, pouvant être oubliées ou perdues.

A cet effet, la présente invention propose un engin roulant non motorisé, de type char à voile ou vélo, ou motorisé, de type kart, sur lequel le pilote est en position semi couchée, comprenant un châssis roulant surmonté d'un siège comportant une assise et un dossier, au moins une partie du dossier étant animée d'un déplacement relatif par rapport à l'assise du siège et étant apte à passer d'une position active d'utilisation, dans laquelle assise et dossier forment un angle obtus, à une position inactive de rangement, dans laquelle le dossier est rabattu au-dessus de l'assise, en vue de constituer un siège repliable, l'engin roulant est caractérisé en ce que le dossier comprend une partie fixe voisine de l'assise et une partie mobile articulée à la partie fixe, cette partie fixe servant de butée de fin de course de la partie mobile en position active du dossier.

Une telle disposition permet de garantir la sécurité du pilote, le siège étant maintenu en position active d'utilisation (c'est-à-dire déployée) sans risque de basculement du dossier vers l'arrière.

En outre, le siège est repliable et présente un encombrement longitudinal réduit par rapport aux sièges formés d'une coque monobloc selon l'art antérieur.

De préférence, la partie mobile du dossier est reliée par une liaison pivot à la partie fixe dudit dossier. Ainsi, le déplacement de la partie mobile du dossier, et donc le pliage et dépliage du siège, peut être effectué sans outil.

Selon une caractéristique avantageuse de l'invention, le siège est monté mobile à la surface supérieure du châssis entre deux positions, l'une dans laquelle il s'étend à l'aplomb du châssis et interdit le déplacement du dossier, l'autre dans laquelle il est disposé au moins partiellement déporté par rapport audit châssis et autorise le basculement de la partie mobile du dossier. Dans ce mode de réalisation, le siège peut par exemple coulisser le long d'au moins un rail solidaire du châssis de l'engin roulant.

La partie mobile du dossier peut en outre comprendre au moins une butée de verrouillage du dossier en position active de ce dernier, cette butée verrouillant ladite partie mobile par appui sur ledit châssis, la butée de verrouillage étant, dans la position déportée du siège, écartée de sa surface d'appui sur le châssis d'une distance suffisante pour permettre le déplacement relatif du dossier par rapport à l'assise et son passage à la position inactive. Ainsi, en position active du dossier, la partie mobile est maintenue en place entre la butée de fin de course formée par la partie fixe du dossier et au moins une butée de verrouillage s'appuyant sur le châssis de l'engin roulant. A cet effet, de manière avantageuse, la partie mobile du dossier se prolonge en direction de la partie fixe pour venir à recouvrement de cette dernière formant butée de fin de course, la base de cette partie mobile étant équipée d'au moins une aile faisant saillie de sa face arrière, cette aile venant en appui sur le châssis en position active du dossier pour constituer ladite butée de verrouillage.

Cette partie mobile du dossier peut notamment comprendre une armature formée d'un profilé cintré dans sa portion supérieure centrale, dont les extrémités distales constituent les butées de verrouillage du dossier et la portion cintrée sert d'arceau de sécurité pour le pilote de l'engin roulant. Cette armature peut en outre être galbée dans le plan du dossier pour épouser la courbe du dos du pilote.

Afin d'assurer son positionnement, ledit siège comporte avantageusement au moins un élément de verrouillage, de type goupille, permettant le réglage et le blocage du siège par rapport au châssis.

La présente invention concerne notamment un char à voile comprenant un châssis roulant surmonté d'un siège, caractérisé en ce que le châssis est constitué d'une poutre axiale sur laquelle sont fixés le mât, au moins une roue avant, deux essieux portant les roues arrière et un support de siège coulissant longitudinalement sur le châssis, la poutre, les roues arrière et les essieux étant démontables afin de permettre le transport et le rangement dudit char à voile avec un encombrement réduit.

L'invention est également relative à tout siège repliable agencé pour équiper tout engin roulant tel que décrit précédemment, de type char à voile, kart ou vélo couché.

Les engins de sport et de loisirs ainsi équipés sont alors aisément transportables, ce qui accroît leur attrait, et par conséquent permet une pratique plus fréquente de ces sports.

La présente invention va maintenant être décrite plus en détail et illustrée ci-après par un exemple relatif à un char à voile, en référence aux figures annexées sur lesquelles :
- la figure 1 est une vue en perspective d'un char à voile selon l'invention, en position active de fonctionnement,
- la figure 2 est une vue en perspective du char à voile selon la figure 1, en position inactive de rangement,
- la figure 3 montre un détail de l'assise et de la partie inférieure du dossier du siège en position active,
- la figure 4 montre un détail de l'assise et de la partie inférieure du dossier du siège lors du basculement du dossier,
- la figure 5 est une vue de dessus du siège du char à voile, sans habillage du dossier.

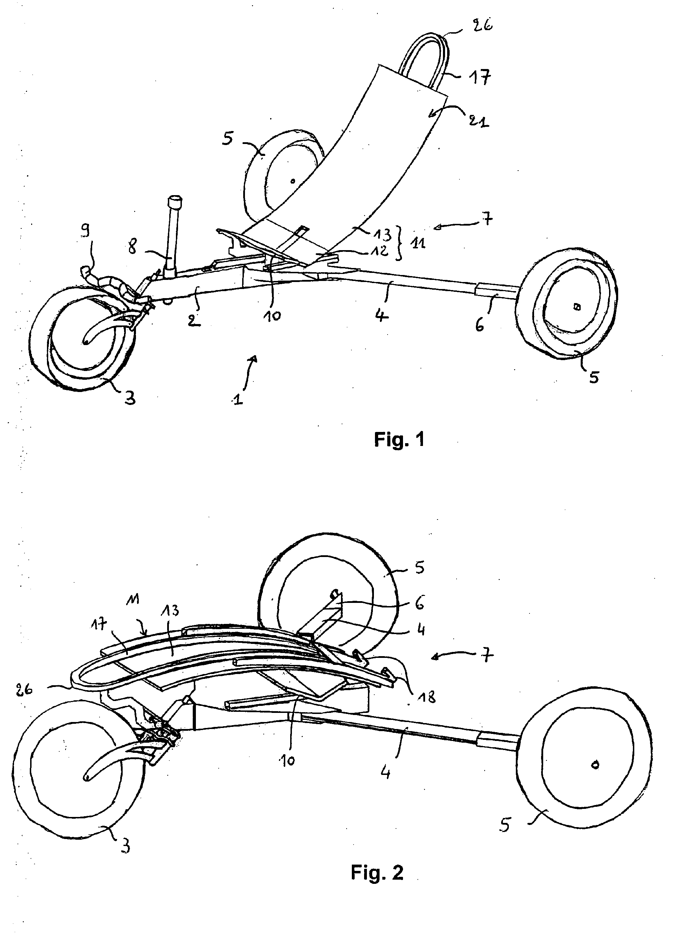

En se référant aux figures 1 et 2, présentant un char à voile selon l'invention, cet engin roulant comporte un châssis roulant 1, constitué d'un cadre formé d'une poutre centrale 2, portant une roue avant 3, un pied de mât 8 et des essieux 4 reliant les roues arrière 5, par l'intermédiaire de leur fusée 6, à la poutre centrale 2. Le châssis 1 est surmonté d'un siège 7, semi incliné en position active d'utilisation, sur lequel s'installe le pilote en position semi couchée, afin de gouverner la roue avant 3 avec ses pieds par l'intermédiaire d'un palonnier 9. Le siège 7 est constitué d'une assise 10 et un dossier 11 formant entre eux, en position active, un angle obtus. Le dossier 11 est réalisé en deux parties : d'une part une partie fixe 12 par rapport à l'assise 10 et disposée à proximité de cette dernière et d'autre part une partie mobile 13 articulée, au moyen d'une liaison pivot 14, à la partie fixe 12 du dossier 11. Dans l'exemple présenté sur les figures 1 et 2, l'assise 10 et la partie fixe 12 du dossier sont fabriquées en une pièce unique, pliée en forme de V ouvert. Dans la zone médiane du dos de la branche du V constituant la partie fixe 12 du dossier est fixé un profilé 15 dépassant dans sa partie supérieure de manière à recevoir un axe horizontal 16 autour duquel pivote la partie mobile 13 du dossier.

La partie mobile 13 du dossier 11 est ici constituée d'une armature 17 sous la forme d'un profilé unique, cintré dans sa portion supérieure centrale 26 et se prolongeant par deux branches parallèles afin de servir d'arceau de sécurité pour le pilote de l'engin roulant. A cet effet, la partie cintrée de l'armature dépasse largement (d'au moins 20 à 30 cm environ) au-dessus de la tête du pilote assis. L'armature est ainsi la première à recevoir notamment la bôme de la voile (non représentée) en cas de problème (lors de la chute accidentelle de la voile par exemple), protégeant de ce fait efficacement la tête du pilote, verticalement et latéralement.

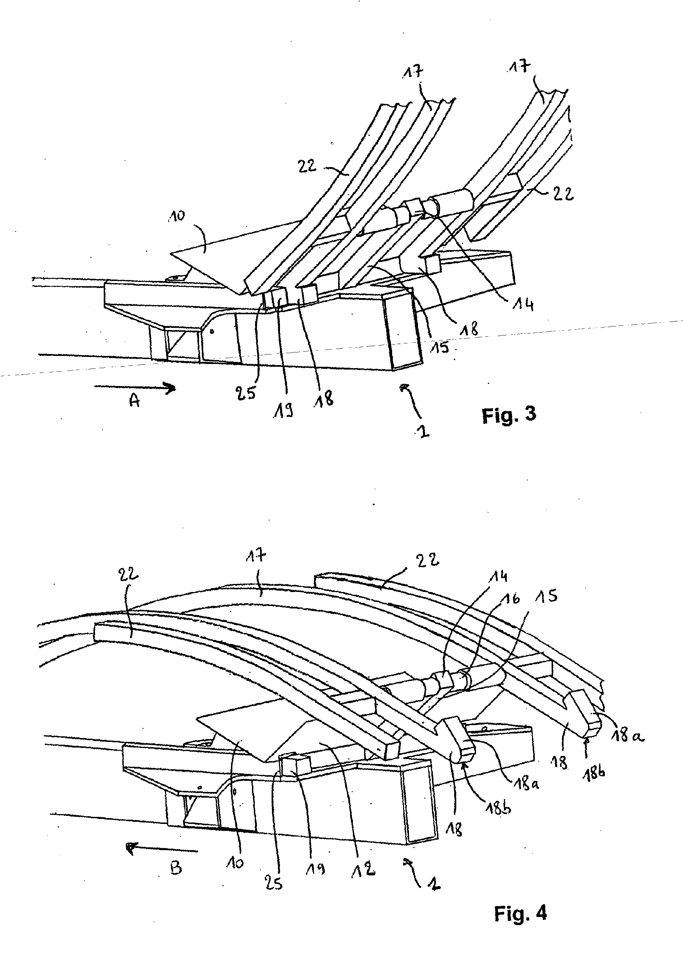

Les extrémités distales des branches de l'armature sont avantageusement repliées vers l'arrière en formant des ailes 18 (visibles sur les figures 2, 3 et 4) destinées à jouer le rôle de butée de verrouillage de la partie mobile 13 du dossier, en position active d'utilisation, par appui de leur face notée 18a (visible sur la figure 4) contre le châssis 1.
La partie mobile 13 du dossier 11 est ainsi, en position active d'utilisation, maintenue entre :
- d'une part la face arrière de la partie fixe 12 qui forme la butée de fin de course du basculement vers l'arrière (lors du dépliage) de la partie mobile 13,
- et d'autre part l'aile 18,qui forme la butée de verrouillage de la partie mobile 13 et sert d'appui sur le châssis tout en interdisant le basculement vers l'avant (repliage) de la partie mobile 13.

L'assise 10 et la partie fixe 12 du dossier 11 du siège 7 sont fixées sur un support 19 monté coulissant le long de la partie supérieure du châssis 1, par exemple, comme visible sur la figure 3 en coulissant dans une goulotte longitudinale 25 en forme de U couché constituant un rail de guidage autorisant uniquement une translation longitudinale avant-arrière du support 19. Pour déverrouiller la partie mobile 13 du dossier 11, l'ensemble support 19 + siège 7 est coulissé longitudinalement vers l'arrière du châssis 1 (suivant la flèche A de la figure 3), de manière à venir en position déportée par rapport au châssis et ainsi libérer l'aile 18. La partie mobile 13 peut alors être basculée vers l'avant, jusqu'au-dessus de l'assise 10 comme représenté sur la figure 4. Il suffit ensuite de coulisser à nouveau le support 19 du siège 7 longitudinalement vers l'avant, suivant la flèche B de la figure 4, pour que l'arête 18b de l'aile 18 vienne à son tour en appui sur le châssis 1 afin de verrouiller la partie mobile 13 du dossier 11, interdisant ainsi le dépliage du siège 7.

L'aile 18 sert donc à la fois de butée de verrouillage en position active d'utilisation (position dépliée) et en position inactive de rangement (position repliée) du siège pliant 7. Elle constitue donc un élément de sécurité important, le siège ne pouvant passer d'une position à une autre lorsque le dossier est positionné à l'aplomb du châssis 1.
Le siège 7 ainsi réalisé est de conception très simple, sans leviers ni ressort, et donc de fabrication peu coûteuse.

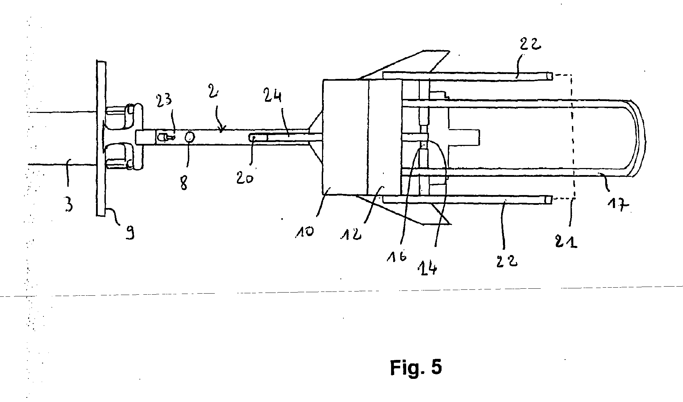

Le coulissement du support 19 du siège 7 est verrouillé sur le châssis 1 par exemple au moyen d'une goupille 20 (visible sur la figure 5 qui présente une vue de dessus du châssis 1) portée par le prolongement avant du support 19 et passant dans des perçages ménagés dans la poutre 2.
Sur cette figure 5 l'habillage 21 (présenté en pointillés) du siège 7 a été omis pour montrer l'armature 17 et la liaison pivot 14.
Le siège 7 du char à voile selon l'invention pouvant ainsi être plié sans difficulté, et manoeuvré entre ses deux positions sans outil, ni pièce intermédiaire supplémentaire, le châssis roulant 1 est de dimensions réduites par rapport aux châssis des chars à voile de l'art antérieur. Les diverses forces qui s'exercent sur ce châssis 1 sont donc de moindre amplitude, ce qui autorise une conception de la poutre 2 en au moins deux parties démontables. A cet effet, la partie avant 23 de la poutre 2, portant la roue avant 3, est conformée en un tube de section différente du prolongement avant 24 du support 19 de manière à coulisser longitudinalement sur ou à l'intérieur de ce prolongement 24 pour un repliage complet du châssis 1. Cette partie avant 23 de la poutre 2 est également munie de perçages dans lesquels passe la goupille 20 afin de maintenir assemblés ladite partie avant 23 et le prolongement 24, tant en position compacte de rangement du châssis 1 qu'en position déployée d'utilisation.

L'emplacement de l'habillage 21 du dossier est schématisé en pointillés. Pour le confort du pilote, un habillage (non représenté) recouvre également l'assise 10 et la partie fixe 12 du dossier 11.

Des renforts 22 latéraux supplémentaires parallèles aux deux branches de l'armature 17 peuvent compléter la partie mobile 13 du dossier 11, et maintenir l'habillage du dossier.

Enfin, le maintien du pilote sur son siège 7 lors de l'utilisation, est réalisé au moyen d'une ceinture de sécurité (non représentée) fixée à l'assise 10 et/ou à l'armature 17 du siège.

Afin de compléter le pliage du char à voile, les extrémités des essieux 4 peuvent être montées amovibles respectivement sur le châssis 1 et sur les fusées 6, par exemple au moyen d'ergots avec ressort disposés en vis-à-vis de perçages appropriés, permettant, une fois les essieux retirés, de réemboîter les fusées 6 directement sur le châssis 1 aux emplacements laissés libres. Ainsi le châssis 1 est raccourci et peut être transporté jusqu'à son lieu de rangement sans effort, en le roulant sur les roues arrières 5.

## Revendications

1. Engin roulant, de type char à voile, kart ou vélo, sur lequel le pilote est en position semi couchée, comprenant un châssis (1) roulant surmonté d'un siège (7) comportant une assise (10) et un dossier (11), au moins une partie du dossier (11) étant animée d'un déplacement relatif par rapport à l'assise (10) du siège (7) et étant apte à passer d'une position active d'utilisation, dans laquelle assise (10) et dossier (11) forment un angle obtus, à une position inactive de rangement, dans laquelle le dossier (11) est rabattu au-dessus de l'assise (10), **caractérisé en ce que** le dossier (11) comprend une partie fixe (12) voisine de l'assise (10) et une partie mobile (13) articulée à la partie fixe (12), cette partie fixe (12) servant de butée de fin de course de la partie mobile (13) en position active du dossier (11).

2. Engin roulant selon la revendication 1, **caractérisé en ce que** la partie mobile (13) du dossier est reliée par une liaison pivot à la partie fixe (12) dudit dossier (11).

3. Engin roulant selon l'une quelconque des revendications 1 et 2, **caractérisé en ce que** le siège (7) est monté mobile à la surface supérieure du châssis (1) entre deux positions, l'une dans laquelle il s'étend à l'aplomb du châssis (1) et interdit le déplacement du dossier (11), l'autre dans laquelle il est disposé au moins partiellement déporté par rapport audit châssis (1) et autorise le basculement de la partie mobile (13) du dossier (11).

4. Engin roulant selon l'une quelconque des revendications 1 à 3, **caractérisé en ce que** la partie mobile (13) du dossier (11) comprend en outre au moins une butée de verrouillage du dossier en position active de ce dernier, cette butée verrouillant la partie mobile (13) du dossier (11) par appui sur ledit châssis (1), et **en ce que** la butée de verrouillage est, dans la position déportée du siège (7), écartée de sa surface d'appui sur le châssis (1) d'une distance suffisante pour permettre le déplacement relatif du dossier (11) par rapport à l'assise (10) et son passage à la position inactive.

5. Engin roulant selon l'une quelconque des revendications précédentes, **caractérisé en ce que** la partie mobile (13) du dossier (11) se prolonge en direction de la partie fixe (12) pour venir à recouvrement de cette dernière formant butée de fin de course, la base de cette partie mobile (13) étant équipée d'au moins une aile (18) faisant saillie de sa face arrière, cette aile (18) venant en appui sur le châssis (1) en position active du dossier (11) pour constituer ladite butée de verrouillage.

6. Engin roulant selon l'une quelconque des revendications précédentes, **caractérisé en ce que** la partie mobile (13) du dossier (11) comprend une armature (17) formée d'un profilé, cintré dans sa portion supérieure centrale (26), dont les extrémités distales constituent les butées de verrouillage du dossier (11) et la portion cintrée sert d'arceau de sécurité pour le pilote de l'engin roulant.

7. Engin roulant selon l'une quelconque des revendications précédentes, **caractérisé en ce que** le siège (7) comporte au moins un élément de verrouillage, de type goupille (20), permettant le réglage et le blocage du siège (7) par rapport au châssis (1).

8. Char à voile selon l'une quelconque des revendications précédentes, comprenant un châssis (1) roulant surmonté d'un siège (7) **caractérisé en ce que** le châssis (1) est constitué d'une poutre (2) axiale sur laquelle sont fixés le mât, au moins une roue avant (3), deux essieux (4) portant les roues arrière (5) et un support (19) de siège (7) coulissant longitudinalement sur le châssis (1), la poutre (2), les roues arrière (5) et les essieux (4) étant démontables afin de permettre le transport et le rangement dudit char à voile avec un encombrement réduit.

9. Siège repliable, comportant une assise (10) et un dossier (11), **caractérisé en ce qu'**il est agencé pour équiper le châssis roulant d'un engin roulant selon l'une quelconque des revendications 1 à 7 ou d'un char à voile selon la revendication 8, au moins une partie du dossier (11) étant animée d'un déplacement relatif par rapport à l'assise (10) du siège (7) et étant apte à passer d'une position active d'utilisation, dans laquelle assise (10) et dossier (11) forment un angle obtus, à une position inactive de rangement, dans laquelle le dossier (11) est rabattu au-dessus de l'assise (10).
